# EUROPÄISCHE PATENTSCHRIFT

(11) **EP 0 415 119 B1**
(45) Veröffentlichungstag und Bekanntmachung des Hinweises auf die Patenterteilung: **30.03.1994**
(21) Anmeldenummer: 90114916.1
(22) Anmeldetag: 03.08.1990
(51) Int. Cl.: C23C 18/16, C25D 21/16, C07C 227/40, B01D 61/44

(54) **Verfahren zur kontinuierlichen Entfernung und Gewinnung von Chelatbildungsmitteln aus Prozesswässern**
Process for continuously removing and recovering complexing compounds from process water
Procédé pour séparer et récupérer en continu les composés chélatants des eaux de traitement

(30) Priorität: 01.09.1989 DE 3929121
(43) Veröffentlichungstag der Anmeldung: 06.03.1991
(73) Patentinhaber: FRAUNHOFER-GESELLSCHAFT ZUR FÖRDERUNG DER ANGEWANDTEN FORSCHUNG E.V., 80636 München (DE)
(72) Erfinder: Strathmann, Heiner, Prof., Dr.-Ing., D-7400 Tübingen 1 (DE); Bauer, Bernd, Dipl. Chem., D-7000 Stuttgart 80 (DE)

(56) Entgegenhaltungen:
- EP-A- 0 416 312
- US-A- 4 549 946
- PATENT ABSTRACTS OF JAPAN, Band 13, Nr. 315 (C-619)[3663], 18. Juli 1989; & JP-A-1 102 049

## Beschreibung

Die Erfindung betrifft ein Verfahren zur kontinuierlichen Entfernung und Gewinnung von Chelatbildungsmitteln aus Prozeßwässern sowie Vorrichtungen zur Durchführung dieses Verfahrens.

Bei zahlreichen chemischen Prozessen werden Chelatbildungsmittel eingesetzt, um Metallionen zu komplexieren, so z.B. in der Galvanik, in der Analytik, in der Synthese wie bei der anionischen Polymerisation oder bei stromlosen Metallbeschichtungsvorgängen, wie z.B. der stromlosen Kupferbeschichtung. Bei all diesen Prozessen wird das Chelatbildungsmittel chemisch nicht verändert und deshalb während des Prozesses nicht verbraucht. Aus wirtschaftlichen und aus umweltrelevanten Gründen ist man deshalb bestrebt, diese Chelatbildungsmittel aus den Prozeßwässern zu entfernen und zurückzugewinnen.

So muß z.B. bei der Herstellung von Leiterplatten sehr häufig auf eine chemische Reaktion zur Kupferabscheidung zurückgegriffen werden. Als wichtigste Inhaltsstoffe dieser sogenannten stromlosen Kupferbeschichtungsbäder sind neben einem Kupfersalz, wie z.B. Kupfersulfat, Kupferchlorid, Kupfernitrat oder Kupferacetat, vorallem ein Reduktionsmittel, wie z.B. Formaldehyd, Glycolaldehyd oder Glyoxal und ein Komplexbildner, bevorzugt ein Chelatbildungsmittel wie z.B. Ethylendiamintetraessigsäure (EDTA), Nitrilotriessigsäure (NTA), Iminodiessigsäure oder Cyclohexandiamintetraessigsäure. Da die Wirksamkeit des Reduktionsmittel in der Regel bei hohen pH-Werten deutlich verbessert ist, muß mit sehr hohen Konzentrationen an Komplexbildnern gearbeitet werden, um die Ausfällung von Metallhydroxid, z.B. Kupferhydroxid, zu vermeiden.

Während der normalen stromlosen Kupferabscheidung läuft z.B. mit Kupfersulfat und mit Formaldehyd als Reduktionsmittel im Beschichtungsbad die folgende Reaktion ab:

CuSO₄ + 4NaOH + 2HCHO -> Cu + Na₂SO₄ + 2Na(HCOO) + H₂ + 2H₂O

Neben dem raschen Verbrauch an Kupfersulfat, Formaldehyd und Natronlauge wird im vorliegenden Fall die Qualität der Kupferabscheidung durch die dazu parallel gehende Anreicherung des Beschichtungsbades mit Natriumsulfat und mit Natriumformiat negativ beeinflußt. Analoges gilt für Kupferbeschichtungsbäder, die als Gegenionen für die Kupferionen Nitrat-, Chlorid- oder Acetationen und als Reduktionsmittel Glycolaldehyd oder Glyoxal enthalten. Der daraus resultierenden Verkürzung der Bad-Standzeiten wird durch eine kontinuierliche Entsorgung der Produktstoffe bei gleichzeitiger Zudosierung der Verbrauchsstoffe entgegengewirkt. So ist z.B. aus der DE-PS-3022962 bekannt, chemische Verkupferungslösungen dadurch zu regenieren, daß die Gegenionen für die Kupferionen und die Ionen, die durch die Oxidation der Reduktionsmittel entstanden sind und die den Beschichtungsvorgang inhibieren, durch Elektrodialyse entfernt werden. Diese Verfahren konnten sich in der Technik jedoch nicht durchsetzen, da sie entweder keinen "steady-state" über lange Versuchsperioden erzielten, oder weil das zur Verfügung stehende Material keine ausreichenden Standzeiten gegenüber dem aggressiven Medium des Kupferbades aufweist. So scheitert beispielweise die direkte elektrodialytische Abtrennung der produzierten Inhibitoren an der mangelhaften Alkalibeständigkeit der kommerziell zur Verfügung stehenden Anionenaustauschermembranen.

Aus der EP 0015737 A1 ist ein Verfahren zur elektrodialytischen Regenerierung von verbrauchten Bädern für die stromlose Kupferbeschichtung bekannt, bei welchem die störenden Anionen durch eine anionenselektive Membran in den Anodenraum abwandern und verbrauchte OH⁻-Ionen über eine zweite anionenselektive Membran aus dem Kathodenraum nachgeführt werden, um den erforderlichen hohen pH-Wert wieder einzustellen. Desweiteren ist aus der US-A-4,549,946 ein Verfahren zur elektrodialytischen Regenerierung von verbrauchten stromlosen Kupferbeschichtungsbädern bekannt, bei welchem die Anionen über eine anionenselektive Membran entfernt und OH⁻-Ionen über den anionenselektiven Teil einer bipolaren Membran nachgeführt werden.

Dieses Verfahren nach der EP-A-0 015 737 scheitert jedoch an der mangelnden Langzeitstabilität kommerzieller Ionenaustauschermembranen. Da bei diesem Verfahren der direkte Kontakt der Membranen mit den Badinhaltstoffen erforderlich ist, erfolgt eine Degradation der Membranen infolge des hohen pH-Wertes und des vorhandenen Formaldehyds. Ferner können die sich bei der Zerstörung der Membranen gebildeten Nebenprodukte negativ auf den Beschichtungsprozeß auswirken. Zusätzlich wird eine große Menge an EDTA⁴⁻ ausgetragen, welches bei pH-Werten >11.5 ein sehr hohes Ionenpotential besitzt. Dieses gelangt schließlich über den Konzentratkreislauf in das Abwasser und muß im Bad als Verbrauchstoff nachdosiert werden.

Im technischen Prozeß müssen stromlose Kupferbeschichtungsbäder mit einem kontinuierlichen Überlauf betrieben werden, der die Volumenvergrößerung infolge einer Nachdosierung der Edukte gerade ausgleicht. Da die beschichteten Leiterplatten nach der Entnahme aus dem Bad mit vollentsalztem Wasser gereinigt werden, kann dieses Spülwasser mit der Lösung des Überlaufes vereinigt werden. Es resultieren somit Lösungen, die neben den Gegenionen für die Kupferionen und den oxidierten Reduktionsmitteln noch Spuren der Reduktionsmittel und vorallem große Mengen an Chelatbildungsmitteln und an Kupfer-Chelatkomplexen enthalten. Aus wirtschaftlichen Gründen und insbesondere wegen der Entsorgungsprobleme ergibt sich dadurch die Forderung nach einer völligen Abtrennung aller umweltrelevanten Komponenten. Da sich Kupfer elektrolytisch unter gleichzeitiger Oxidation des Reduktionsmittels entfernen läßt, entstehen wesentliche Entsorgungsprobleme bei der Abtrennung der Chelatbildungsmittel.

Aus der DE-AS 2115687 ist ein Verfahren zur kontinuierlichen Aufbereitung von Waschwässern der stromlosen Metallabscheidung durch Elektrodialyse bekannt. Dabei erfolgt eine Aufkonzentrierung der zurückzugewinnenden Ionen mittels einer Elektrodialyse-Zelle mit anionen- und kationendurchlässigen Membranen, wobei die Elektrolytwaschströme im Kreislauf geführt werden und die Spannung so eingestellt werden kann, daß eine Membranpolarisation vorliegt. Die direkte Durchströmung des Konzentratkreislaufes der ersten Elektrodialyse-Stufe mit der unbehandelten Lösung des Bades führt jedoch zu einer stark eingeschränkten Membranstabilität, besonders der Anionenaustauschermembranen. Ferner ist mit diesem Verfahren eine Abtrennung von Chelatbildungsmitteln, wie z.B. von EDTA, unmöglich, da hierfür die Lösung zunächst auf einen pH-Wert von ca 1.7 eingestellt werden müßte.

Chelatbildungsmittelhaltige Lösungen werden z.B. durch Zersetzung der Chelatbildungsmittel entsorgt. Diese Zersetzung kann durch chemische oder durch anodische Oxidation erfolgen. Diese Verfahren sind jedoch mit hohen Kosten für die eingesetzten Chemikalien oder mit einem hohen Energieaufwand verbunden. Ferner ist es technisch nur schwer möglich, diese Reaktionen so zu führen, daß bezüglich ihrer Auswirkungen auf die Umwelt ausschließlich unbedenkliche und nicht-toxische Zersetzungsprodukte gebildet werden. Dies wird insbesondere dann relevant, wenn unter den vom Gesetzgeber vorgegebenen Emissionsraten Chelatbildungsmit- tel, z.B. EDTA, ins Abwasser geleitet werden sollen.

Als weiterer Nachteil dieser Zersetzungsreaktionen ist jedoch auch der laufende Verbrauch an Chelatbildungsmittel zu nennen. Da die Chelatbildungsmittel z.B. bei den Beschichtungsprozessen oder in der Analytik ausschließlich als Komplexbildner wirken und somit nicht verbraucht werden, ist in jedem Fall ein Recycling der Chelatbildungsmittel wünschenswert. Dies Recycling wird durch die Abtrennung der ladungsneutralen Chelatbildungsmittel erreicht. Dazu wird durch eine Elektrolyse im alkalischen Bereich, z.B. bei pH-Werten um 13, das komplexierte Metall, z.b. Kupfer, aus der Lösung abgeschieden und gleichzeitig das Chelatbildungsmittel, z.B. EDTA, aus dem Komplex freigesetzt. Im Falle der stromlosen Beschichtungsbäder, wie z.B. bei der Kupferbeschichtung, wird in einer zweiten Reaktion das Reduktionsmittel oxidiert, z.B. Formaldehyd zu Ameisensäure. Dann muß durch Zugabe von starken Mineralsäuren, z.B. durch Schwefelsäure, der pH-Wert der Lösung in den Bereich des Isoelektrischen Punktes gesenkt werden, damit sich das ladungsneutrale Chelatbildungsmittel bilden kann, welches dann mit Hilfe üblicher Trennverfahren isoliert werden kann. So muß z.B. im Falle des EDTA als Chelatbildungsmittel der pH-Wert der Lösung auf 1.7 eingestellt werden, um das ladungsneutrale EDTA durch Kristallisation abtrennen zu können. Der Überstand mit einem EDTA-Gehalt von bis zu 1500 ppm wird abgetrennt, mit Natronlauge neutralisiert und einer Eindampfanlage zugeführt. Das dabei erhaltene Neutralsalz enthält im Falle von Sulfationen als Gegenionen für die Metallionen vorwiegend Natriumsulfat aus dem Fällungs- und Neutralisationsschritt und nur etwa 2% Na₂EDTA. Dieser geringe Anteil an Komplexbildner macht jedoch eine Deklaration und Deponierung als Sondermüll notwendig.

Aufgabe dieser Erfindung ist es deshalb, ein Verfahren zur Verfügung zu stellen, mit dem Chelatbildungsmittel ohne Verwendung weiterer Hilfsstoffe quantitativ und kontinuierlich aus Prozeßwässern entfernt und gewonnen werden können, und mit dem eine Einleitung dieser Prozeßwässer ohne weitere Erhöhung der Salzfracht direkt ins Abwasser realisierbar wird bzw. eine Rückführung in den Prozeß ermöglicht wird. Ferner ist es Aufgabe dieser Erfindung, Vorrichtungen zur Verfügung zu stellen, mit denen das erfindungsgemäße Verfahren durchgeführt werden kann.

Gelöst wird diese Aufgabe dadurch, daß man gegebenenfalls aus dem Prozesswasser durch Elektrodialyse diejenigen Metallionen, die mit dem Chelatbildungsmittel einen Komplex bilden können, entfernt, daß man gegebenenfalls nichtverbrauchtes Reduktionsmittel oxidiert, daS man das Chelatbildungsmittel enthaltende Prozeßwasser in eine Elektrodialyse-Zelle (EDZ1) leitet, an die eine Potentialdifferenz angelegt ist und die abwechselnd mit bipolaren Membranen und Anionenaustauschermembranen und/oder Kationenaustauschermembranen ausgerüstet ist, daß man das Chelatbildungsmittel in der Elektrodialyse-Zelle (EDZ1) in die ladungsneutrale Form überführt, daS man die hierfür erforderlichen Protonen über bipolare Membranen mittels Elektrodialyse erzeugt, und daß man den erforderlichen pH-Wert durch eine pH-gesteuerte Spannungsregelung über die bipolaren Membranen justiert.

Ohne Einschränkung der Allgemeinheit können mit dem erfindungsgemäßen Verfahren Chelatbildungsmittel wie Ethylendiamintetraessigsäure (EDTA), Nitrilotriessigsäure (NTA), Iminodiessigsäure, Cyclohexandiamintetraessigsäure oder andere aus Prozeßwässern entfernt werden. Ferner können mit dem erfindungsgemäßen Verfahren ohne Einschränkung der Allgemeinheit Chelatbildungsmittel aus Prozeßwässern der stromlosen Metallbeschichtung, der Galvanik, der Analytik, der Synthese, wie etwa der anionischen Polymerisation, oder anderen entfernt werden. Ganz besonders gut eignet sich das erfindungsgemäße Verfahren zur kontinuierlichen Entfernung und Gewinnung von Chelatbildungsmitteln aus Bädern der stromlosen Kupferbeschichtung.

Der große Vorteil des erfindungsgemäßen Verfahrens liegt darin, daß die für die Überführung der Chelatbildungsmittel in die ladungsfreie Form benötigten Protonen nicht über Mineralsäuren - und damit verbunden mit einer Zugabe von zusätzlichen Anionen - zugefügt werden, sondern über eine elektrodialytische Wasserspaltung mittels bipolaren Membranen, wobei der jeweils erforderliche pH-Wert für die Protonierung durch eine pH-gesteuerte Spannungsregelung über die bipolaren Membranen eingestellt und damit eine pH-Drift vermieden wird, so daß das erfindungsgemäße Verfahren kontinuierlich bei optimalen pH-Werten durchgeführt werden kann.

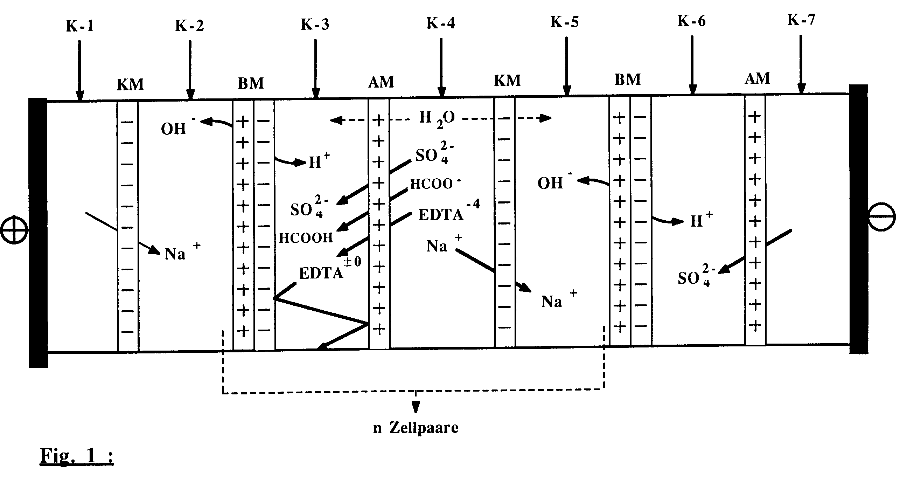

In den Figuren 1 bis 3 sind die zur Durchführung des erfindungsgemäßen Verfahrens wesentlichen Bestandteile der hierfür entwickelten Elektrodialyse-Zellen EDZ1 dargestellt, sowie, ohne Einschränkung der Allgemeinheit, die Reaktionen in den einzelnen Kammern am Beispiel von Kupferbeschichtungsbädern, die mit Kupfersulfat, EDTA als Chelatbildungsmittel, Formaldehyd als Reduktionsmittel und Natronlauge als Base arbeiten.

Die Elektrodialyse-Zelle gemäß Figur 1 enthält die folgende Anordnung von Anode (A), Kathode (K), bipolaren Membranen (BM), Anionenaustauschermembranen (AM), Kationenaustauschermembranen (KM) und Kammern (Kᵢ), wobei die anionenselektive Schicht der bipolaren Membranen der Anode zugewandt ist und n Werte von 1 bis 100 bedeuten.

A-K₁-KM-K₂-(BM-K₃-AM-K₄-KM-K₅-)ₙ BM-K₆-AM-K₇-K

Die Kammer K₁ bildet den Anodenraum und wird kathodenseitig durch eine Kationenaustauschermembran begrenzt, die Kammer K₂ anodenseitig durch eine Kationenaustauschermembran und kathodenseitig durch eine bipolare Membran, die Kammer K₆ anodenseitig durch eine bipolare Membran und kathodenseitig durch eine Anionenaustauschermembran. Die Kammer K₇ bildet den Kathodenraum und wird anodenseitig durch eine Anionenaustauschermembran begrenzt. Die Kammern K₃, K₄ und K₅ bilden eine Einheit, die n-mal aneinandergereiht vorhanden ist, wobei n die Werte von 1 bis 100 einnehmen kann, bevorzugt die Werte 2 bis 10. Die Kammer K₃ ist anodenseitig durch eine bipolare Membran und kathodenseitig durch eine Anionenaustauschermembran begrenzt, die Kammer K₄ anodenseitig durch eine Anionenaustauschermembran und kathodenseitig durch eine Kationenaustauschermembran, die Kammer K₅ anodenseitig durch eine Kationenaustauschermembran und kathodenseitig durch eine bipolare Membran.

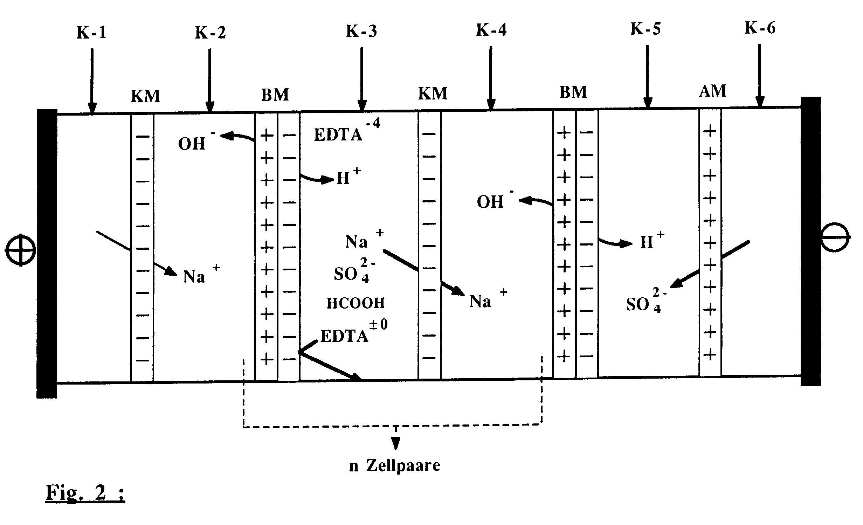

Die Elektrodialyse-Zelle gemäß Figur 2 enthält die folgende Anordnung von Anode (A), Kathode (K), bipolaren Membranen (BM), Anionenaustauschermembran (AM), Kationenaustauschermembranen (KM) und Kammern (Kᵢ), wobei die anionenselektive Schicht der bipolaren Membranen der Anode zugewandt ist und n Werte von 1 bis 100 bedeuten.

A-K₁-KM-K₂-(BM-K₃-KM-K₄-)ₙ BM-K₅-AM-K₆-K

Die Kammer K₁ bildet den Anodenraum und wird kathodenseitig durch eine Kationenaustauschermembran begrenzt, die Kammer K₂ anodenseitig durch eine Kationenaustauschermembran und kathodenseitig durch eine bipolare Membran, die Kammer K₅ anodenseitig durch eine bipolare Membran und kathodenseitig durch eine Anionenaustauschermembran. Die Kammer K₆ bildet den Kathodenraum und wird anodenseitig durch eine Anionenaustauschermembran begrenzt. Die Kammern K₃ und K₄ bilden eine Einheit, die n-mal aneinandergereiht vorhanden ist, wobei n die Werte von 1 bis 100 einnehmen kann, bevorzugt die Werte 2 bis 10. Die Kammer K₃ ist anodenseitig durch eine bipolare Membran und kathodenseitig durch eine Kationenaustauschermembran begrenzt, die Kammer K₄ anodenseitig durch eine Kationenaustauschermembran und kathodenseitig durch eine bipolare Membran.

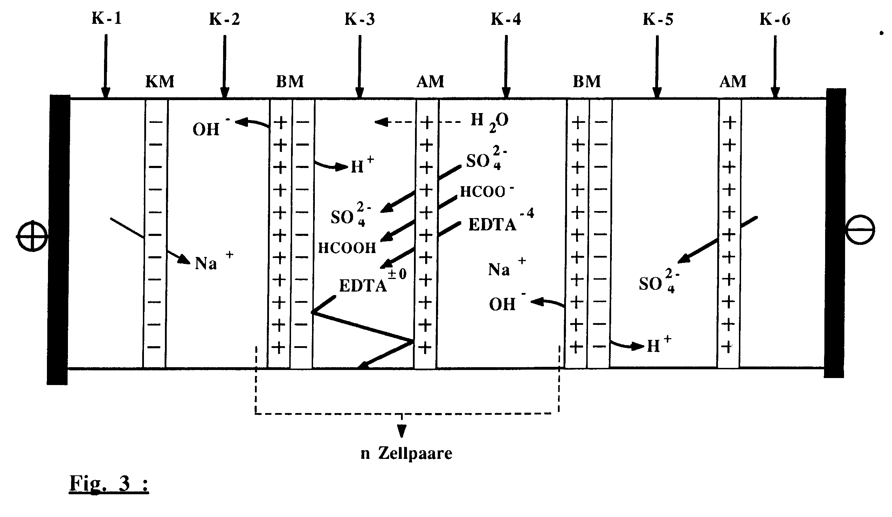

Die Elektrodialyse-Zelle gemäß Figur 3 enthält die folgende Anordnung von Anode (A), Kathode (K), bipolaren Membranen (BM), Anionenaustauschermembranen (AM), Kationenaustauschermembran (KM) und Kammern (Kᵢ), wobei die anionenselektive Schicht der bipolaren Membranen der Anode zugewandt ist und n Werte von 1 bis 100 bedeuten.

A-K₁-KM-K₂-(BM-K₃-AM-K₄-)ₙ BM-K₅-AM-K₆-K

Die Kammer K₁ bildet den Anodenraum und wird kathodenseitig durch eine Kationenaustauschermembran begrenzt, die Kammer K₂ anodenseitig durch eine Kationenaustauschermembran und kathodenseitig durch eine bipolare Membran, die Kammer K₅ anodenseitig durch eine bipolare Membran und kathodenseitig durch eine Anionenaustauschermembran. Die Kammer K₆ bildet den Kathodenraum und wird anodenseitig durch eine Anionenaustauschermembran begrenzt. Die Kammern K₃ und K₄ bilden eine Einheit, die n-mal aneinandergereiht vorhanden ist, wobei n die Werte von 1 bis 100 einnehmen kann, bevorzugt die Werte 2 bis 10. Die Kammer K₃ ist anodenseitig durch eine bipolare Membran und kathodenseitig durch eine Anionenaustauschermembran begrenzt, die Kammer K₄ anodenseitig durch eine Anionenaustauschermembran und kathodenseitig durch eine bipolare Membran.

Das erfindungsgemäße Verfahren wird nachstehend anhand von 3 Ausführungsformen unter Bezugnahme der Figuren 1 bis 3 näher beschrieben.

Eine erste Ausführungsform des erfindungsgemäßen Verfahrens sieht wie folgt aus. Nachdem aus dem Prozeßwasser gegebenenfalls durch Elektrolyse diejenigen Metallionen, die mit dem Chelatbildungsmittel einen Komplex bilden können, entfernt wurden, wird das gegebenfalls alkalisch eingestellte Prozeßwasser in die Kammern K₄ der Elektrodialyse-Zelle EDZ1 gemäß Figur 1 geleitet. Nach Anlegen einer elektrischen Gleichspannung wandern die Anionen und mit diesen die deprotonierten bzw. als Anionen vorliegenden Chelatbildungsmittel durch die Anionenaustauschermembranen in die Kammern K₃ und die Kationen durch die Kationenaustauschermembranen in die Kammern K₅. Aufgrund des angelegten elektrischen Gleichfeldes wird über die bipolaren Membranen eine elektrodialytische Wasserspaltung bewirkt und aus den bipolaren Membranen werden Protonen in die Kammern K₃ und in die Kammer K₆ und Hydroxidionen in die Kammern K₅ und in die Kammer K₂ geliefert. In der Kammer K₃ erfolgt durch die Protonen der elektrodialytischen Wasserspaltung die Protonierung des Chelatbildungsmittels. Durch Einstellung eines pH-Wertes in der Kammer K₃ in die Nähe des Neutralpunktes bzw. des isoelektrischen Punktes des Chelatbildungsmittels wird erreicht, daß das Chelatbildungsmittel in seine ladungsneutrale Form übergeführt wird. Aus den Kammern K₃ kann nun eine Flüssigkeit (Suspension, Lösung oder Emulsion) entnommen werden, die das Chelatbildungsmittel in seiner ladungsneutralen Form enthält. Aus dieser Flüssigkeit kann dann das Chelatbildungsmittel mit Hilfe üblicher Trennverfahren, wie z.B. durch Filtration, Destillation, fraktionierte Kristallisation oder andere, gewonnen werden. Aus den Kammern K₄ wird gereinigtes Prozeßwasser entnommen, das entweder dem Abwasser zugeführt oder einer weiteren Reinigung unterzogen oder in den Prozeß rückgeführt werden kann.

Am Beispiel der Abtrennung von EDTA aus verbrauchten Bädern der Kupferbeschichtung, mit Kupfersulfat als eingesetztem Kupfersalz, Formaldehyd als Reduktionsmittel und Natronlauge als Base, laufen in den Kammern der Elektrodialyse-Zelle gemäß Figur 1 folgende Reaktionen ab. Nach dem aus dem verbrauchten Bad gegebenenfalls durch Elektrolyse Kupferionen bei einem pH-Wert von 12.5 bis 13 entfernt und nicht verbrauchter Formaldehyd zu Ameisensäure oxidiert wurde, zeigt die Badflüssikeit einen pH-Wert von 12.5 bis 13 und enthält neben Wasser noch Sulfat-, Formiat-, Natrium- und EDTA-Ionen. Vergleiche hierzu auch die Reaktionsgleichung von Seite 2. Nachdem diese Flüssigkeit in die Kammern K₄ der Elektrodialyse-Zelle EDZ1 geleitet wurde, wandern, nach Anlegen eines elektrischen Gleichfeldes, die Sulfat-, die Formiat- und die EDTA-Ionen durch die Anionenaustauschermembranen in die Kammern K₃, die Natriumionen durch die Kationenaustauschermembranen in die Kammern K₅. In den Kammern K₃ werden bei entsprechenden pH-Werten die Formiationen zu Ameisensäure protoniert und das EDTA in seine ladungsneutrale Form übergeführt. Bei pH-Werten ab 3.3 wird eine beginnende Kristallisation des ladungsneutralen EDTA sichtbar, wobei der EDTA-Gehalt der überstehenden Lösung erst bei einem pH-Wert von 1.7 sein Minimum erreicht. In den Kammern K₅ wird aus den Natriumionen der Kammern K₄ und den Hydroxidionen aus den bipolaren Membranen Natronlauge gebildet. Die Kammer K₁ enthält als Anolyt Natriumsulfat oder Natronlauge, die Kammer K₇ als Katholyt Natriumsulfat oder Schwefelsäure. Durch die Kationenaustauschermembran wandern aus der Kammer K₁ Natriumionen in die Kammer K₂ und bilden mit den Hydroxidionen aus der bipolaren Membran Natronlauge. Durch die Anionenaustauschermembran wandern aus der Kammer K₇ Sulfationen in die Kammer K₆ und bilden mit den Protonen aus der bipolaren Membran Schwefelsäure. Aus der Kammer K₄ wird gereinigtes Prozeßwasser entnommen und aus der Kammer K₃ eine Suspension, aus der durch Filtration reines EDTA isoliert werden kann. Aus den Kammern K₂ und K₅ kann reine Natronlauge gewonnen werden und aus der Kammer K₆ reine Schwefelsäure, die im Kreislauf den Kammern K₁ und K₇ wieder zugeführt werden können. Somit ist eine kontinuierliche Aufarbeitung möglich.

Eine zweite Ausführungsform des erfindungsgemäßen Verfahrens sieht wie folgt aus. Nachdem aus dem Prozeßwasser gegebenenfalls durch Elektrolyse diejenigen Metallionen, die mit dem Chelatbildungsmittel einen Komplex bilden können, entfernt wurden, wird das gegebenfalls alkalisch eingestellte Prozeßwasser in die Kammern K₃ der Elektrodialyse-Zelle EDZ1 gemäß Figur 2 geleitet. Nach Anlegen einer elektrischen Gleichspannung wandern die Kationen durch die Kationenaustauschermembranen in die Kammern K₄. Aufgrund des angelegten elektrischen Gleichfeldes wird über die bipolaren Membranen eine elektrodialytische Wasserspaltung bewirkt und aus den bipolaren Membranen werden Protonen in die Kammern K₃ und in die Kammer K₅ und Hydroxidionen in die Kammern K₄ und in die Kammer K₂ geliefert. In der Kammer K₃ erfolgt durch die Protonen der elektrodialytischen Wasserspaltung die Protonierung des Chelatbildungsmittels. Durch Einstellung eines pH-Wertes in der Kammer K₃ in die Nähe des Neutralpunktes bzw. des isoelektrischen Punktes des Chelatbildungsmittels wird erreicht, daß das Chelatbildungsmittel in seine ladungsneutrale Form übergeführt wird. Aus den Kammern K₃ kann nun eine Flüssigkeit (Suspension, Lösung oder Emulsion) entnommen werden, die das Chelatbildungsmittel in seiner ladungsneutralen Form enthält. Aus dieser Flüssigkeit kann dann das Chelatbildungsmittel mit Hilfe üblicher Trennverfahren, wie z.B. durch Filtration, Destillation, fraktionierte Kristallisation oder andere, gewonnen werden.

Am Beispiel der Abtrennung von EDTA aus verbrauchten Bädern der Kupferbeschichtung, mit Kupfersulfat als eingesetztem Kupfersalz, Formaldehyd als Reduktionsmittel und Natronlauge als Base, laufen in den Kammern der Elektrodialyse-Zelle gemäß Figur 2 folgende Reaktionen ab. Nach dem aus dem verbrauchten Bad eventuell durch Elektrolyse Kupferionen bei einem pH-Wert von 12.5 bis 13 entfernt und nicht verbrauchter Formaldehyd zu Ameisensäure oxidiert wurde, zeigt die Badflüssikeit einen pH-Wert von 12.5 bis 13 und enthält neben Wasser noch Sulfat-, Formiat-, Natrium- und EDTA-Ionen. Vergleiche hierzu auch die Reaktionsgleichung von Seite 2. Nachdem diese Flüssigkeit in die Kammern K₃ der Elektrodialyse-Zelle EDZ1 geleitet wurde, wandern, nach Anlegen eines elektrischen Gleichfeldes, die Natriumionen durch die Kationenaustauschermembranen in die Kammern K₄. In den Kammern K₃ werden bei entsprechenden pH-Werten die Formiationen zu Ameisensäure protoniert und das EDTA in seine ladungsneutrale Form übergeführt. Bei pH-Werten ab 3.3 wird eine beginnende Kristallisation des ladungsneutralen EDTA sichtbar, wobei der EDTA-Gehalt der überstehenden Lösung erst bei einem pH-Wert von 1.7 sein Minimum erreicht.

In den Kammern K₄ wird aus den Natriumionen der Kammern K₃ und den Hydroxidionen aus den bipolaren Membranen Natronlauge gebildet. Die Kammer K₁ enthält als Anolyt Natriumsulfat oder Natronlauge, die Kammer K₆ als Katholyt Natriumsulfat oder Schwefelsäure. Durch die Kationenaustauschermembran wandern aus der Kammer K₁ Natriumionen in die Kammer K₂ und bilden mit den Hydroxidionen aus der bipolaren Membran Natronlauge. Durch die Anionenaustauschermembran wandern aus der Kammer K₆ Sulfationen in die Kammer K₅ und bilden mit den Protonen aus der bipolaren Membran Schwefelsäure. Aus der Kammer K₃ wird eine Suspension entnommen, aus der durch Filtration reines EDTA isoliert werden kann. Aus den Kammern K₂ und K₄ kann reine Natronlauge gewonnen werden und aus der Kammer K₅ reine Schwefelsäure, die im Kreislauf den Kammern K₁ und K₆ wieder zugeführt werden können. Somit ist eine kontinuierliche Aufarbeitung möglich.

Eine dritte Ausführungsform des erfindungsgemäßen Verfahrens sieht wie folgt aus. Nachdem aus dem Prozeßwasser gegebenenfalls durch Elektrolyse diejenigen Metallionen, die mit dem Chelatbildungsmittel einen Komplex bilden können, entfernt wurden, wird das gegebenfalls alkalisch eingestellte Prozeßwasser in die Kammern K₄ der Elektrodialyse-Zelle EDZ1 gemäß Figur 3 geleitet. Nach Anlegen einer elektrischen Gleichspannung wandern die Anionen und mit diesen die deprotonierten bzw. als Anionen vorliegenden Chelatbildungsmittel durch die Anionenaustauschermembranen in die Kammern K₃. Aufgrund des angelegten elektrischen Gleichfeldes wird über die bipolaren Membranen eine elektrodialytische Wasserspaltung bewirkt und aus den bipolaren Membranen werden Protonen in die Kammern K₃ und in die Kammer K₅ und Hydroxidionen in die Kammern K₄ und in die Kammer K₂ geliefert. In der Kammer K₃ erfolgt durch die Protonen der elektrodialytischen Wasserspaltung die Protonierung des Chelatbildungsmittels. Durch Einstellung eines pH-Wertes in der Kammer K₃ in die Nähe des Neutralpunktes bzw. des isoelektrischen Punktes des Chelatbildungsmittels wird erreicht, daß das Chelatbildungsmittel in seine ladungsneutrale Form übergeführt wird. Aus den Kammern K₃ kann nun eine Flüssigkeit (Suspension, Lösung oder Emulsion) entnommen werden, die das Chelatbildungsmittel in seiner ladungsneutralen Form enthält. Aus dieser Flüssigkeit kann dann das Chelatbildungsmittel mit Hilfe üblicher Trennverfahren, wie z.B. durch Filtration, Destillation, fraktionierte Kristallisation oder andere, gewonnen werden. Aus den Kammern K₄ wird gereinigtes Prozeßwasser entnommen, das entweder dem Abwasser zugeführt oder einer weiteren Reinigung unterzogen oder in den Prozeß rückgeführt werden kann.

Am Beispiel der Abtrennung von EDTA aus verbrauchten Bädern der Kupferbeschichtung, mit Kupfersulfat als eingesetztem Kupfersalz, Formaldehyd als Reduktionsmittel und Natronlauge als Base, laufen in den Kammern der Elektrodialyse-Zelle gemäß Figur 3 folgende Reaktionen ab. Nach dem aus dem verbrauchten Bad eventuell durch Elektrolyse Kupferionen bei einem pH-Wert von 12.5 bis 13 entfernt und nicht verbrauchter Formaldehyd zu Ameisensäure oxidiert wurde, zeigt die Badflüssikeit einen pH-Wert von 12.5 bis 13 und enthält neben Wasser noch Sulfat-, Formiat-, Natrium- und EDTA-Ionen. Vergleiche hierzu auch die Reaktionsgleichung von Seite 2. Nachdem diese Flüssigkeit in die Kammern K₄ der Elektrodialyse-Zelle EDZ1 geleitet wurde, wandern, nach Anlegen eines elektrischen Gleichfeldes, die Sulfat-, Formiat- und die EDTA-Anionen durch die Anionenaustauschermembranen in die Kammern K₃. In diesen werden bei entsprechenden pH-Werten die Formiationen zu Ameisensäure protoniert und das EDTA in seine ladungsneutrale Form übergeführt. Bei pH-Werten ab 3.3 wird eine beginnende Kristallisation des ladungsneutralen EDTA sichtbar, wobei der EDTA-Gehalt der überstehenden Lösung erst bei einem pH-Wert von 1.7 sein Minimum erreicht. In den Kammern K₄ wird aus den Natriumionen und den Hydroxidionen aus den bipolaren Membranen Natronlauge gebildet. Die Kammer K₁ enthält als Anolyt Natriumsulfat oder Natronlauge, die Kammer K₆ als Katholyt Natriumsulfat oder Schwefelsäure. Durch die Kationenaustauschermembran wandern aus der Kammer K₁ Natriumionen in die Kammer K₂ und bilden mit den Hydroxidionen aus der bipolaren Membran Natronlauge. Durch die Anionenaustauschermembran wandern aus der Kammer K₆ Sulfationen in die Kammer K₅ und bilden mit den Protonen aus der bipolaren Membran Schwefelsäure. Aus der Kammer K₃ wird eine Suspension entnommen, aus der durch Filtration reines EDTA isoliert werden kann. Aus der Kammern K₂ kann reine Natronlauge gewonnen werden und aus der Kammer K₅ reine Schwefelsäure, die im Kreislauf den Kammern K₁ und K₆ wieder zugeführt werden können. Somit ist eine kontinuierliche Aufarbeitung möglich.

Um ein sich selbst regelndes System zu erhalten und um damit eine kontinuierliche Entsorgung und Gewinnung der Chelatbildungsmittel durchführen zu können, ist ein wichtiges Merkmal des erfindungsgemäßen Verfahrens die pH-Justierung in den Kammern K₃ der Elektrodialyse-Zellen EDZ1 gemäß den Figuren 1 bis 3 durch eine pH-gesteuerte Spannungsregelung über die bipolaren Membranen. Dazu wird in den Kammern K₃ der Elektrodialyse-Zellen EDZ1 der Figuren 1 bis 3 die Elektrode eines pH-Meßgerätes placiert, und dieses pH-Meßgerät an einen Rechner angeschlossen, welcher einen Spannungregeler steuert. So wird in Abhängigkeit vom pH-Wert in den Kammern K₃ die an die Elektrodialyse-Zelle EDZ1 angelegte Potentialdifferenz gesteuert und damit über die bipolaren Membranen der pH-Wert in den Kammern K₃ geregelt.

In Abhängigkeit von den zu entfernenden Chelatbildungsmitteln kann somit jeweils der optimale pH-Wert für die Überführung des Chelatbildunsgmittels in die ladungsneutrale Form eingestellt werden. Ohne Einschränkung der Allgemeinheit werden hierbei pH-Werte in der Nähe des Neutralpunktes bzw. des isoelektrischen Punktes bevorzugt.

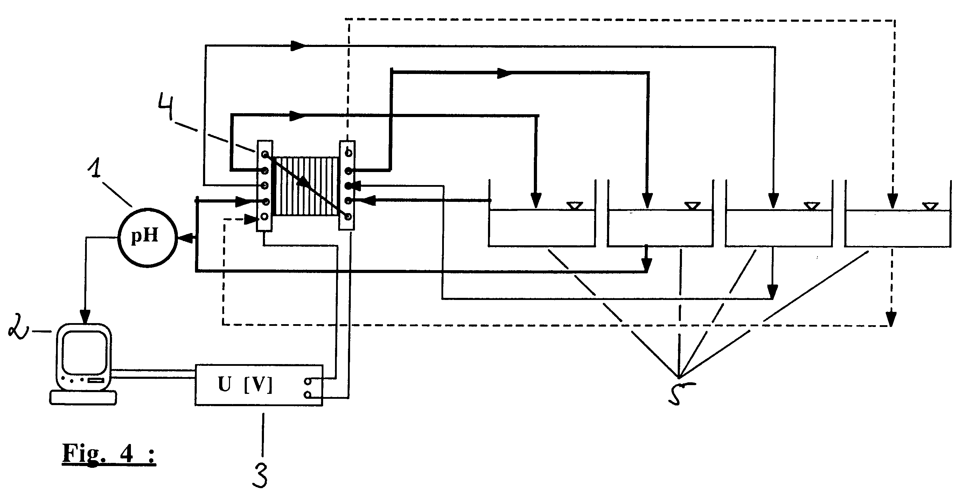

Figur 4 zeigt eine Anordnung dieser Spannungsregelung, wobei (1) das pH-Meßgerät, (2) den Rechner, (3) den Spannungsregeler, (4) die Elektrodialyse-Zelle und (5) die Spülbehälter für die Kammern der Elektrodialyse-Zelle darstellt.

Zur Durchführung des erfindungsgemäßen Verfahrens werden die Elektrodialyse-Zellen EDZ1 ohne Einschränkung der Allgemeinheit mit Stromdichten von 1 bis 150 mA/cm², bevorzugt mit 2 bis 20 mA/cm² betrieben.

Bei den Elektrodialyse-Zellen EDZ1 zur Durchführung des erfindungsgemäßen Verfahrens können handelsübliche Kationen- und Anionenaustauschermembranen verwendet werden. Beispiele für Kationenaustauschermembranen sind NEOSEPTA ^{R} CL-25 T, NEOSEPTA ^{R} CMS (Tokuyama Soda Co., Japan) und SELEMION ^{R} CMV (Asahi Glass Co., Japan). Beispiele für Anionenaustauschermembranen sind NEOSEPTA ^{R} ACH-45 T, NEOSEPTA ^{R} AMS, SELEMION ^{R} AMV, SELEMION ^{R} AMP und SELEMION ^{R} AMF. Bei den Elektrodialyse-Zellen zur Durchführung des erfindungsgemäßen Verfahrens wird der Anodenraum durch eine Kationenaustauschermembran und der Kathodenraum durch eine Anionenaustauschermembran begrenzt. Ohne Einschränkung der Allgemeimheit werden hierfür bevorzugt Austauschermembranen vom Typ Neosepta ^{R} CMX und AMX der Firma Tokuyama Soda Co., Japan, verwendet. Ohne Einschränkung der Allgemeinheit werden für den Zellstappel bevorzugt Anionenaustauschermembranen vom Typ NEOSEPTA ^{R} ACM, NEOSEPTA ^{R} AFN oder NEOSEPTA ^{R} AM-3 verwendet und Kationenaustauschermembranen vom Typ NEOSEPTA ^{R} CMS oder NEOSEPTA ^{R} CM-2.

Bei den NEOSEPTA^{R}-Membranen der Firma Tokuyama Soda Co., Japan, handelt es sich um mikroheterogene Ionenaustauschermembranen vom Typ Interpolymermembran. Das Grundgerüst wird nach der sog. "paste method"aus 100 Teilen PVC-Pulver, 90 Teilen F-Monomer, 10 Teilen Divinylbenzol, 30 Teilen Dioctylphthalat und Teil Benzoylperoxid durch Beschichten eines PVC-Netzes hergestellt. Als F-Monomer werden Styrol bei Kationenaustauschermembranen, Chlormethylstyrol, 4-Vinylpyridin oder 2-Methyl-5-vinylpyridin bei Anionenaustauschermembranen verwendet. Bei den Membranen der Firma Asahi Glass handelt es sich um quasihomogene Ionenaustauschermembranen. Diese werden aus einem Styrol-Vorpolymerisat und einem Styrol/Butadien-Copolymeren nach Zusatz von Divinylbenzol auf einem PVC-Netz hergestellt. Die Funktionalisierung erfolgt entweder durch Sulfonierung (CMV) oder durch Chlormethylierung und anschließende Quaternisierung (AMV). Die folgende Tabelle enthält die technische Daten der oben genannten Austauschermembranen. Die Kationenaustauschermembranen sind stark sauer (-SO₃H) und liegen in der Na-Form vor, die Anionenaustauschermembranen sind stark basisch (-N⁺R₄) und liegen in der Cl-Form vor. Der elektrische Widerstand wurde mit 0.5 n NaCl-Lösung bei 25 °C bestimmt.

| SELEMION^{R} | Typ | Elektr. Widerst. [Ω cm²] | Berstwiderst. [kg cm⁻²] | Dicke [mm] |
|---|---|---|---|---|
| CMV | kationenpermeabel | 2.0-3.5 | 3-5 | 0.13-0.15 |
| AMV | anionenpermeabel | 1.5-3.0 | 2-5 | 0.11-0.15 |

| NEOSEPTA^{R} | Typ | Elektr. Widerst. [Ω cm²] | Berstwiderst. [kg cm⁻²] | Dicke [mm] |
|---|---|---|---|---|
| Cl-25T | kationenpermeabel | 2.2-3.0 | 3.0-4.0 | 0.15-0.17 |
| CMS | kationenpermeabel | 1.5-2.5 | 3-4 | 0.14-0.17 |
| CMX | kationenpermeabel | 2.5-3.5 | 5-6 | 0.17-0.19 |
| CM-2 | kationenpermeabel | 2.0-3.0 | 3.0-3.5 | 0.13-0.16 |
| AMX | anionenpermeabel | 2.5-3.5 | 4.5-5.5 | 0.16-0.18 |
| ACM | anionenpermeabel | 4.0-5.0 | 2-3 | 0.11-0.13 |
| AFN | anionenpermeabel | 0.4-1.5 | 2-3.5 | 0.15-0.20 |
| AM-3 | anionenpermeabel | 3.0-4.0 | 3.0-3.5 | 0.13-0.16 |
| ACH-45T | anionenpermeabel | 2.0-2.7 | 3.5-4.5 | 0.14-0.20 |
| ACS | anionenpermeabel | 2.0-2.5 | 3-5 | 0.15-0.20 |

CMX und AMX sind mechanisch verstärkt, AFN ist Fouling resistent und ACH-45T ist bei hohen pH-Werten einsetzbar.

Bei der SELEMION^{R} AMP handelt es sich um eine besonders alkalistabile Membran und bei der SELEMION^{R} AMF um eine Fouling resistente.

Als bipolare Membranen können Laminate zweier ionenselektiver Filme entgegengesetzter Polarität verwendet werden, die durch Zusammenlegen handelsüblicher Kationen- und Anionenaustauschermembranen erhältlich sind, oder funktionalisierte Kompositfilme mit kationen- und anionen-selektiven Eigenschaften beiderseits der Membran. Zu deren Herstellung wird auf den Artikel "Development of Bipolar Membranes" von B. Bauer, F.J. Gerner und H. Strathmann in Desalination, 68, 279-292, 1988, verwiesen.

In einigen Fällen kann es zweckdienlich sein, aus den Prozeßwässern vor deren Aufarbeitung nach dem erfindungsgemäßen Verfahren, d.h. vor deren Einleitung in die Elektrodialyse-Zellen EDZ1, diejenigen Metallionen elektrolytisch zu entfernen, die mit dem Chelatbildungsmittel einen Komplex bilden können und dadurch das Verfahrensergebnis beeinträchtigen würden. Ohne Einschränkung der Allgemeinheit kann es sich hierbei um Nickel-, Chrom-, Kupfer- oder andere Metallionen handeln.

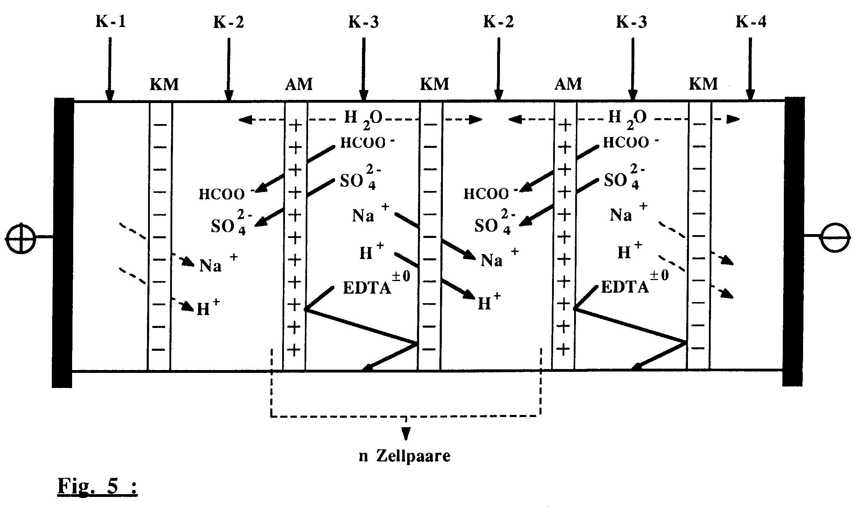

Entsprechend dem Anwendungsfall kann es zweckdienlich sein, nach der Abtrennung des ladungsneutralen Chelatbildungsmittels die verbleibende Lösung vor deren Einleitung in das Abwasser durch eine zweite Elektrodialyse-Zelle EDZ2 zuleiten, die abwechselnd mit Anionen- und Kationenaustauschermembranen ausgestattet ist, um noch vorhandene Ionen zu entfernen. Ebenso ist es möglich, vor der Abtrennung des Chelatbildungsmittels die aus den Kammern K₃ der Elektrodialyse-Zellen EDZ1 erhaltene Flussigkeit zur weiteren Abtrennung von Ionen in die Elektrodialyse-Zelle EDZ2 einzuleiten. Figur 5 zeigt eine solche Elektrodialyse-Zelle EDZ2. Sie enthält die folgende Anordnung von Anode (A), Kathode (K), Anionenaustauschermembranen (AM), Kationenaustauschermembranen (KM) und Kammern Kᵢ, wobei n Werte zwischen 1 und 100 einnehmen kann. Bevorzugt werden Zellen mit Werten für n zwischen 2 und 10.

A-K₁-KM-K₂-(AM-K₃-KM-K₂-)ₙ AM-K₃-KM-K₄-K

Ohne Einschränkung der Allgemeinheit werden die Elektrodialyse-Zellen EDZ2 bevorzugt mit Stromdichten zwischen 5 und 30 mA/cm² betrieben.

Das in der Elektrodialyse-Zelle EDZ1 vorgereinigte Prozeßwasser wird in die Kammern K₃ der Elektrodialyse-Zelle EDZ2 gemäß Figur 5 geleitet und daraus, nach Anlegen einer Potentialdifferenz, über die Anionenaustauschermembranen die Anionen und über die Kationenaustauschermembranen die Kationen entfernt. Aus den Kammern K₃ der Elektrodialyse-Zelle EDZ2 wird dann entweder gereinigtes oder mit dem ladungsneutralen Chelatbildungsmittel angereichertes Prozeßwasser entnommen, aus dem entweder über übliche Trennverfahren das Chelatbildungsmittel isoliert werden kann, das dem Abwasser oder erneut dem Prozeß zugeführt werden kann.

Das erfindungsgemäße Verfahren bietet somit die Möglichkeit, gegebenenfalls in Verbindung mit weiteren Verfahrensschritten, wie z.B. der elektrolytischen Vorreinigung und/oder der elektrodialytischen Nachreinigung, aus Prozeßwässern kontinuierlich Chelatbildungsmittel zu entfernen und zu gewinnen und das Prozeßwasser so zu reinigen, daß es entweder direkt in das Abwasser abgegeben oder erneut in den Prozeß rückgeführt werden kann.

## Patentansprüche (Patentansprüche für folgende(n) Vertragsstaat(en): AT, CH, LI)

1. Verfahren zur kontinuierlichen Entfernung und Gewinnung von Chelatbildungsmitteln aus Prozeßwässern durch Protonierung der deprotonierten, als Anionen vorliegenden Chelatbildungsmittel mit folgenden Merkmalen:
- man entfernt gegebenenfalls aus dem Prozeßwasser durch Elektrolyse diejenigen Metallionen, die mit dem Chelatbildungsmittel einen Komplex bilden können;
- man oxidiert gegebenenfalls nichtverbrauchtes Reduktionsmittel;
- man leitet das Chelatbildungsmittel enthaltende Prozeßwasser in eine Elektrodialyse-Zelle EDZ1, an die eine Potentialdifferenz angelegt ist und die abwechselnd mit bipolaren Membranen und Anionenaustauschermembranen und/oder Kationenaustauschermembranen ausgerüstet ist und deren Anodenraum durch eine Kationen- und deren Kathodenraum durch eine Anionenaustauschermembran begrenzt wird;
- man überführt das Chelatbildungsmittel in seine ladungsneutrale, protonierte Form;
- man erzeugt die hierfür erforderlichen Protonen über bipolare Membranen durch Elektrodialyse;
- man justiert den erforderlichen pH-Wert durch eine pH-gesteuerte Spannungsregelung über die bipolaren Membranen.

2. Verfahren nach Anspruch 1, **dadurch gekennzeichnet,** daß das als Anion vorliegende Chelatbildungsmittel vor der Protonierung über eine Anionenaustauschermembran durch Elektrodialyse aus dem Prozeßwasser abgetrennt und in eine Kammer, begrenzt durch eine bipolare Membran und durch die Anionenaustauschermembran, übergeführt wird.

3. Verfahren nach einem oder mehreren der Ansprüche 1 bis 2, **dadurch gekennzeichnet,** daß aus dem Prozeßwasser Kationen durch Elektrodialyse über eine Kationenaustauschermembran entfernt werden.

4. Verfahren nach einem oder mehreren der Ansprüche 1 bis 3, **dadurch gekennzeichnet,** daß die Elektrodialyse-Zelle EDZ1 mit einer Stromdichte von 1 bis 150 mA/cm², bevorzugt von 2 bis 20 mA/cm² betrieben wird.

5. Verfahren nach einem oder mehreren der Ansprüche 1 bis 4, **dadurch gekennzeichnet,** daß aus dem Prozeßwasser vor dessen Einleitung in die Elektrodialyse-Zelle EDZ1 Nickel- und/oder Chrom- und/oder Kupferionen elektrolytisch entfernt werden.

6. Verfahren nach einem oder mehreren der Ansprüche 1 bis 5, **dadurch gekennzeichnet,** daß Chelatbildungsmittel aus verbrauchten Metallbeschichtungsbädern, bevorzugt aus Bädern der Kupfer- oder der Chrom- oder der Nickelbeschichtung, abgetrennt und gewonnen werden.

7. Verfahren nach Anspruch 6, **dadurch gekennzeichnet,** daß Chelatbildungsmittel aus Bädern abgetrennt und gewonnen werden, die Oxidationsprodukte der Reduktionsmittel Formaldehyd, Glycolaldehyd oder Glyoxal enthalten.

8. Verfahren nach einem oder mehreren der Ansprüche 1 bis 7, **dadurch gekennzeichnet,** daß als Chelatbildungsmittel Ethylendiamintetraessigsäure (EDTA), Nitrilotriessigsäure (NTA), Iminodiessigsäure oder Cyclohexandiamintetraessigsäure abgetrennt und gewonnen werden.

9. Elektrodialyse-Zelle EDZ1 zur Durchführung des Verfahrens nach einem oder mehreren der Ansprüche 1 bis 8, **dadurch gekennzeichnet,** daß sie die folgende Anordnung von Anode (A), Kathode (K), bipolaren Membranen (BM), Anionenaustauschermembranen (AM), Kationenaustauschermembranen (KM) und Kammern (Kᵢ) aufweist, wobei die anionenselektive Schicht der bipolaren Membranen der Anode zugewandt ist und n Werte von 1 bis 100, bevorzugt von 2 bis 10, bedeuten.
A-K₁-KM-K₂-(BM-K₃-AM-K₄-KM-K₅-)ₙ BM-K₆-AM-K₇-K

10. Elektrodialyse-Zelle EDZ1 zur Durchführung des Verfahrens nach einem oder mehreren der Ansprüche 1, 3 bis 8, **dadurch gekennzeichnet,** daß sie die folgende Anordnung von Anode (A), Kathode (K), bipolaren Membranen (BM), Anionenaustauschermembran (AM), Kationenaustauschermembranen (KM) und Kammern (Kᵢ) aufweist, wobei die anionenselektive Schicht der bipolaren Membranen der Anode zugewandt ist und n Werte von 1 bis 100, bevorzugt von 2 bis 10, bedeuten.
A-K₁-KM-K₂-(BM-K₃-KM-K₄-)ₙ BM-K₅-AM-K₆-K

11. Elektrodialyse-Zelle EDZ1 zur Durchführung des Verfahrens nach einem oder mehreren der Ansprüche 1, 2, 4 bis 8, **dadurch gekennzeichnet,** daß sie die folgende Anordnung von Anode (A), Kathode (K), bipolaren Membranen (BM), Anionenaustauschermembranen (AM), Kationenaustauschermembran (KM) und Kammern (Kᵢ) aufweist, wobei die anionenselektive Schicht der bipolaren Membranen der Anode zugewandt ist und n Werte von 1 bis 100, bevorzugt von 2 bis 10, bedeuten.
A-K₁-KM-K₂-(BM-K₃-AM-K₄-)ₙ BM-K₅-AM-K₆-K

## Patentansprüche (Patentansprüche für folgende(n) Vertragsstaat(en): DE, FR, GB)

1. Verfahren zur kontinuierlichen Entfernung und Gewinnung von Chelatbildungsmitteln aus Prozeßwässern durch Protonierung der deprotonierten, als Anionen vorliegenden Chelatbildungsmittel mit folgenden Merkmalen:
- man entfernt gegebenenfalls aus dem Prozeßwasser durch Elektrolyse diejenigen Metallionen, die mit dem Chelatbildungsmittel einen Komplex bilden können;
- man oxidiert gegebenenfalls nichtverbrauchtes Reduktionsmittel;
- man leitet das Chelatbildungsmittel enthaltende Prozeßwasser in eine Elektrodialyse-Zelle EDZ1, an die eine Potentialdifferenz angelegt ist und die abwechselnd mit bipolaren Membranen und Anionenaustauschermembranen und/oder Kationenaustauschermembranen ausgerüstet ist und deren Anodenraum durch eine Kationen- und deren Kathodenraum durch eine Anionenaustauschermembran begrenzt wird;
- man überführt das Chelatbildungsmittel in seine ladungsneutrale, protonierte Form;
- man erzeugt die hierfür erforderlichen Protonen über bipolare Membranen durch Elektrodialyse;
- man justiert den erforderlichen pH-Wert durch eine pH-gesteuerte Spannungsregelung über die bipolaren Membranen.

2. Verfahren nach Anspruch 1, **dadurch gekennzeichnet,** daß das als Anion vorliegende Chelatbildungsmittel vor der Protonierung über eine Anionenaustauschermembran durch Elektrodialyse aus dem Prozeßwasser abgetrennt und in eine Kammer, begrenzt durch eine bipolare Membran und durch die Anionenaustauschermembran, übergeführt wird.

3. Verfahren nach einem oder mehreren der Ansprüche 1 bis 2, **dadurch gekennzeichnet,** daß aus dem Prozeßwasser Kationen durch Elektrodialyse über eine Kationenaustauschermembran entfernt werden.

4. Verfahren nach einem oder mehreren der Ansprüche 1 bis 3, **dadurch gekennzeichnet,** daß die Elektrodialyse-Zelle EDZ1 mit einer Stromdichte von 1 bis 150 mA/cm², bevorzugt von 2 bis 20 mA/cm² betrieben wird.

5. Verfahren nach einem oder mehreren der Ansprüche 1 bis 4, **dadurch gekennzeichnet,** daß aus dem Prozeßwasser vor dessen Einleitung in die Elektrodialyse-Zelle EDZ1 Nickel- und/oder Chrom- und/oder Kupferionen elektrolytisch entfernt werden.

6. Verfahren nach einem oder mehreren der Ansprüche 1 bis 5, **dadurch gekennzeichnet,** daß Chelatbildungsmittel aus verbrauchten Metallbeschichtungsbädern, bevorzugt aus Bädern der Kupfer- oder der Chrom- oder der Nickelbeschichtung, abgetrennt und gewonnen werden.

7. Verfahren nach Anspruch 6, **dadurch gekennzeichnet,** daß Chelatbildungsmittel aus Bädern abgetrennt und gewonnen werden, die Oxidationsprodukte der Reduktionsmittel Formaldehyd, Glycolaldehyd oder Glyoxal enthalten.

8. Verfahren nach einem oder mehreren der Ansprüche 1 bis 7, **dadurch gekennzeichnet,** daß als Chelatbildungsmittel Ethylendiamintetraessigsäure (EDTA), Nitrilotriessigsäure (NTA), Iminodiessigsäure oder Cyclohexandiamintetraessigsäure abgetrennt und gewonnen werden.

## Claims (Claims for the following Contracting State(s): AT, CH, LI)

1. Method of continuously removing and recovering chelating agents from process waters by way of protonation of the deprotonated chelating agents present in the form of anions, comprising the following features:
- if necessary, those metal ions are electrolytically removed from said process water, which are suitable to form a complex together with said chelating agent;
- if necessary, unused reduction agent is oxidized;
- the process water containing said chelating agent is passed into an electrodialysis cell EDZ1 which a potential difference is applied to and which is equipped with bipolar membranes and anion exchanger membranes and/or cation exchanger membranes in alternation, and the anode region of which is defined by a cation exchanger membrane while its cathode region is defined by an anion exchanger membrane;
- said chelating agent is converted into its neutral-charge protonated form;
- the protons required to this end are generated through bipolar membranes by way of electrodialysis;
- the necessary pH level is adjusted by way of a pH-controlled voltage control through said bipolar membranes.

2. Method according to Claim 1, **characterized in** that prior to electrodialysis said chelating agent present in the anion form is electrodialytically separated from said process water through an anion exchanger membrane, and introduced into a chamber defined by a bipolar membrane and by said anion exchanger membrane.

3. Method according to one or several of Claims 1 to 2, **characterized in** that cations are electrodialytically removed from said process water through a cation exchanger membrane.

4. Method according to one or several of Claims 1 to 3, **characterized in** that said electrodialysis cell EDZ1 is operated at a current density of 1 to 150 mA/m², preferably from 2 to 20 mA/m².

5. Method according to one or several of Claims 1 to 4, **characterized in** that nickel and/or chromium and/or copper ions are electrolytically removed from said process water prior to the latter's introduction into said electrodialysis cell EDZ1.

6. Method according to one or several of Claims 1 to 5, **characterized in** that chelating agents are removed and recovered from used metal plating baths, preferably from baths for copper or chromium or nickel plating.

7. Method according to Claim 6, **characterized in** that chelating agents are removed and recovered from baths containing the oxidation products of the reducing agents formaldehyde, glycolaldehyde or glyoxal.

8. Method according to one or several of Claims 1 to 7, **characterized** in that ethylene diamine tetraacetic acid (EDTA), nitrilotriacetic acid (NTA), iminodiacetic acid or cyclohexane diamine tetraacetic acid are removed and recovered as chelating agents.

9. Electrodialysis cell EDZ1 for carrying through the method according to one or several of Claims 1 to 8, **characterized in** that it comprises the following array of an anode (A), a cathode (K), bipolar membranes (BM), anion exchanger membranes (AM), cation exchanger membranes (KM) and chambers (Kᵢ), with the anion-selective layer of said bipolar membranes facing said anode, and wherein n represents values from 1 to 100, preferably from 2 to 10:
A-K₁-KM-K₂-(BM-K₃-AM-K₄-KM-K₅-)ₙ BM-K₆-AM-K₇-K.

10. Electrodialysis cell EDZ1 for carrying through the method according to one or several of Claims 1, 3 to 8, **characterized in** that it comprises the following array of an anode (A), cathode (K), bipolar membranes (BM), an anion exchanger membrane (AM), cation exchanger membranes (KM) and chambers (Kᵢ), with the anion-selective layer of said bipolar membranes facing said anode, and wherein n represents values from 1 to 100, preferably from 2 to 10:
A-K₁-KM-K₂-(BM-K₃-KM-K₄-)ₙ BM-K₅-AM-K₆-K.

11. Electrodialysis cell EDZ1 for carrying through the method according to one or several of Claims 1, 2, 4 to 8, **characterized in** that it comprises the following array of an anode (A), cathode (K), bipolar membranes (BM), anion exchanger membranes (AM), a cation exchanger membrane (KM) and chambers (Kᵢ), with the anion-selective layer of said bipolar membranes facing said anode, and wherein n represents values from 1 to 100, preferably from 2 to 10:
A-K₁-KM-K₂-(BM-K₃-AM-K₄-)ₙ BM-K₅-AM-K₆-K.

## Claims (Claims for the following Contracting State(s): DE, FR, GB)

1. Method of continuously removing and recovering chelating agents from process waters by way of protonation of the deprotonated chelating agents present in the form of anions, comprising the following features:
- if necessary, those metal ions are electrolytically removed from said process water, which are suitable to form a complex together with said chelating agent;
- if necessary, unused reduction agent is oxidized;
- the process water containing said chelating agent is passed into an electrodialysis cell EDZ1 which a potential difference is applied to and which is equipped with bipolar membranes and anion exchanger membranes and/or cation exchanger membranes in alternation, and the anode region of which is defined by a cation exchanger membrane while its cathode region is defined by an anion exchanger membrane;
- said chelating agent is converted into its neutral-charge protonated form;
- the protons required to this end are generated through bipolar membranes by way of electrodialysis;
- the necessary pH level is adjusted by way of a pH-controlled voltage control through said bipolar membranes.

2. Method according to Claim 1, **characterized in** that prior to electrodialysis said chelating agent present in the anion form is electrodialytically separated from said process water through an anion exchanger membrane, and introduced into a chamber defined by a bipolar membrane and by said anion exchanger membrane.

3. Method according to one or several of Claims 1 to 2, **characterized in** that cations are electrodialytically removed from said process water through a cation exchanger membrane.

4. Method according to one or several of Claims 1 to 3, **characterized in** that said electrodialysis cell EDZ1 is operated at a current density of 1 to 150 mA/m², preferably from 2 to 20 mA/m².

5. Method according to one or several of Claims 1 to 4, **characterized in** that nickel and/or chromium and/or copper ions are electrolytically removed from said process water prior to the latter's introduction into said electrodialysis cell EDZ1.

6. Method according to one or several of Claims 1 to 5, **characterized in** that chelating agents are removed and recovered from used metal plating baths, preferably from baths for copper or chromium or nickel plating.

7. Method according to Claim 6, **characterized in** that chelating agents are removed and recovered from baths containing the oxidation products of the reducing agents formaldehyde, glycolaldehyde or glyoxal.

8. Method according to one or several of Claims 1 to 7, **characterized** in that ethylene diamine tetraacetic acid (EDTA), nitrilotriacetic acid (NTA), iminodiacetic acid or cyclohexane diamine tetraacetic acid are removed and recovered as chelating agents.

## Revendications (Revendications pour l'(les) Etat(s) contractant(s) suivant(s): AT, CH, LI)

1. Procédé continu d'éliminer et récupérer des chélateurs des eaux de processus industriels par protonation des chélateurs déprotonés qui sont présents sous forme d'anions, comprenant les caractéristiques suivantes:
- ceux ions métalliques sont éventuellement éliminés électrolytiquement desdites eaux de processus industriels, qui sont appropriés à former un complexe ensemble avec lesdits chélateurs agent;
- de réducteur non épuisé est éventuellement oxydé;
- l'eau du processus industriel, qui contient ledit chélateur, est passée dans une cellule d'électrodialyse EDZ1 à laquelle on applique une différence ou potentiel et qui est prévue des membranes bipolaires et des membranes d'échange d'anions et/ou des membranes d' échange de cations en alternance, et dont la région anodique est définie par une membrane d'échange de cations pendant que sa région cathodique est définie par une membrane d'échange d'anions;
- ledit chélateur est converti dans da forme protonée à charge neutre;
- les protons requis à cette fin sont engendrés par des membranes bipolaires par voie électrodialytique;
- la valeur pH requise est ajustée moyennant un réglage de tension à commande par la valeur pH, par lesdites membranes bipolaires.

2. Procédé selon la revendication 1, **caractérisé en ce** qu'avant l' électrodialyse, ledit chélateur présent sous sa forme anionique est éliminé de l' eau de processus industriel par voie électrodialytique par une membrane d'échange d'anions, et introduit dans une chambre définie par une membrane bipolaire et par ladite membrane d'échange d'anions.

3. Procédé selon une ou plusieurs des revendications 1 à 2, **caractérisé en ce** que des cations sont éliminés par voie électrodialytique de l'eau de processus industriel, par une membrane d'échange de cations.

4. Procédé selon une ou plusieurs des revendications 1 à 3, **caractérisé en ce** que ladite cellule d'électrodialyse EDZ1 est agencée à une densité de courant de 1 à 150 mA/m², de préférence entre 2 et 20 mA/m².

5. Procédé selon une ou plusieurs des revendications 1 à 4, **caractérisé en ce** que des ions de nickel et/ou de chrome et/ou de cuivre sont électrolytiquement éliminés de l'eau de processus industriel avant que la dernière est introduite dans ladite cellule d'électrodialyse EDZ1.

6. Procédé selon une ou plusieurs des revendications 1 à 5, **caractérisé en ce** que des chélateurs sont éliminés et récupérés de bains épuisés d'électrodéposition métallique, de préférence de bains d'électrodéposition de cuivre ou de chrome ou de nickel.

7. Procédé selon la revendication 6, **caractérisé en ce que** des chélateurs sont éliminés et récupérés des bains qui contiennent des produits d' oxydation des réducteurs formaldéhyde, aldéhyde glycol ou glyoxal.

8. Procédé selon une ou plusieurs des revendications 1 à 7, **caractérisé en ce** que l'acide tétraacétique de diamine éthylénique (EDTA), l'acide nitrilo-triacétique (NTA), l'acide iminodiacétique ou l'acide tétraacétique de diamine de cyclohexane sont éliminées et récupérées comme chélateurs.

9. Cellule d' électrodialyse EDZ1 pour la réalisation du procédé selon une ou plusieurs des revendications 1 à 8, **caractérisée en ce** qu'elle comprend l'arrangement suivant à une anode (A), une cathode (K), aux membranes bipolaires (BM), aux membranes d'échange d'anions (AM), aux membranes d'échange de cations (KM) ainsi qu'aux chambres (Kᵢ), dans laquelle la couche sélective aux anions desdites membranes bipolaires se trouvent en face de ladite anode, et dans laquelle n représente des valeurs de 1 à 100, de préférence entre 2 et 10:
A-K₁-KM-K₂-(BM-K₃-AM-K₄-KM-K₅-)ₙ BM-K₆-AM-K₇-K.

10. Cellule d'électrodialyse EDZ1 pour la réalisation du procédé selon une ou plusieurs des revendications 1, 3 à 8, **caractérisée en ce** qu'elle comprend l'arrangement suivant à une anode (A), une cathode (K), aux membranes bipolaires (BM), à une membrane d'échange d'anions (AM), aux membranes d'échange de cations (KM) ainsi qu'aux chambres (Kᵢ), dans laquelle la couche sélective aux anions desdites membranes bipolaires se trouvent en face de ladite anode, et dans laquelle n représente des valeurs de 1 à 100, de préférence entre 2 et 10:
A-K₁-KM-K₂-(BM-K₃-KM-K₄-)ₙ BM-K₅-AM-K₆-K.

11. Cellule d' électrodialyse EDZ1 pour la réalisation du procédé selon une ou plusieurs des revendications 1, 2, 4 à 8, **caractérisée en ce** qu'elle comprend l'arrangement suivant à une anode (A), une cathode (K), aux membranes bipolaires (BM), aux membranes d'échange d'anions (AM), à une membrane d'échange de cations (KM) ainsi qu'aux chambres (Kᵢ), dans laquelle la couche sélective aux anions desdites membranes bipolaires se trouvent en face de ladite anode, et dans laquelle n représente des valeurs de 1 à 100, de préférence entre 2 et 10:
A-K₁-KM-K₂-(BM-K₃-AM-K₄-)ₙ BM-K₅-AM-K₆-K.

## Revendications (Revendications pour l'(les) Etat(s) contractant(s) suivant(s): DE, FR, GB)

1. Procédé continu d'éliminer et récupérer des chélateurs des eaux de processus industriels par protonation des chélateurs déprotonés qui sont présents sous forme d' anions, comprenant les caractéristiques suivantes:
- ceux ions métalliques sont éventuellement éliminés électrolytiquement desdites eaux de processus industriels, qui sont appropriés à former un complexe ensemble avec lesdits chélateurs agent;
- de réducteur non épuisé est éventuellement oxydé;
- l'eau du processus industriel, qui contient ledit chélateur, est passée dans une cellule d' électrodialyse EDZ1 à laquelle on applique une différence du potentiel et qui est prévue des membranes bipolaires et des membranes d'échange d'anions et/ou des membranes d'échange de cations en alternance, et dont la région anodique est définie par une membrane d'échange de cations pendant que sa région cathodique est définie par une membrane d'échange d'anions;
- ledit chélateur est converti dans da forme protonée à charge neutre;
- les protons requis à cette fin sont engendrés par des membranes bipolaires par voie électrodialytique;
- la valeur pH requise est ajustée moyennant un réglage de tension à commande par la valeur pH, par lesdites membranes bipolaires.

2. Procédé selon la revendication 1, **caractérisé en ce** qu'avant l'électrodialyse, ledit chélateur présent sous sa forme anionique est éliminé de l'eau de processus industriel par voie électrodialytique par une membrane d'échange d'anions, et introduit dans une chambre définie par une membrane bipolaire et par ladite membrane d'échange d'anions.

3. Procédé selon une ou plusieurs des revendications 1 à 2, **caractérisé en ce** que des cations sont éliminés par voie électrodialytique de l'eau de processus industriel, par une membrane d'échange de cations.

4. Procédé selon une ou plusieurs des revendications 1 à 3, **caractérisé en ce** que ladite cellule d'électrodialyse EDZ1 est agencée à une densité de courant de 1 à 150 mA/m², de préférence entre 2 et 20 mA/m².

5. Procédé selon une ou plusieurs des revendications 1 à 4, **caractérisé en ce** que des ions de nickel et/ou de chrome et/ou de cuivre sont électrolytiquement éliminés de l'eau de processus industriel avant que la dernière est introduite dans ladite cellule d'électrodialyse EDZ1.

6. Procédé selon une ou plusieurs des revendications 1 à 5, **caractérisé en ce** que des chélateurs sont éliminés et récupérés de bains épuisés d'électrodéposition métallique, de préférence de bains d'électrodéposition de cuivre ou de chrome ou de nickel.

7. Procédé selon la revendication 6, **caractérisé en ce que** des chélateurs sont éliminés et récupérés des bains qui contiennent des produits d'oxydation des réducteurs formaldéhyde, aldéhyde glycol ou glyoxal.

8. Procédé selon une ou plusieurs des revendications 1 à 7, **caractérisé en ce** que l'acide tétraacétique de diamine éthylénique (EDTA), l'acide nitrilo-triacétique (NTA), l'acide iminodiacétique ou l'acide tétraacétique de diamine de cyclohexane sont éliminées et récupérées comme chélateurs.
